## Europäisches Patentamt
## European Patent Office
## Office européen des brevets

(19)

(11) Veröffentlichungsnummer: **0 485 775 A1**

# EUROPÄISCHE PATENTANMELDUNG

(12)

(21) Anmeldenummer: **91118121.2**

(22) Anmeldetag: **24.10.91**

(51) Int. Cl.5: **H01J 9/04**, B23K 1/00, H01J 1/15

(30) Priorität: **07.11.90 DE 4035361**

(43) Veröffentlichungstag der Anmeldung:
**20.05.92 Patentblatt 92/21**

(84) Benannte Vertragsstaaten:
**CH DE FR LI NL**

(71) Anmelder: **Licentia Patent-Verwaltungs-GmbH**
**Theodor-Stern-Kai 1**
**W-6000 Frankfurt/Main 70(DE)**

(72) Erfinder: **Herrmann, Ulrich**
**Albert-Einsteinstrasse 15**
**W-7913 Senden(DE)**

(74) Vertreter: **Amersbach, Werner, Dipl.-Ing. et al**
**Licentia Patent-Verwaltungs-GmbH**
**Theodor-Stern-Kai 1**
**W-6000 Frankfurt 70(DE)**

(54) **Verfahren zum Herstellen einer direkf geheizten Kathode.**

(57) Es wird vorgeschlagen, die Befestigung einer Kathodenwendel aus Wolfram an Molybdänstegen durch Löten mit Platin bei punktförmig zugeführter Wärmeenergie wie z.B. Laserenergie vorzunehmen.

EP 0 485 775 A1

Die vorliegende Erfindung betrifft ein Verfahren zum Herstellen einer direkt geheizten Kathode nach dem Oberbegriff des Patentanspruches 1.

Bei Röngtenröhren ist es bekannt, Kathodenwendeln aus Wolframdraht zu verwenden. Gehalten werden solche Wolframwendeln an Metallstegen oder Metallzuführungen, die z.B. aus Molybdän bestehen. Die Befestigung von Heizwendeln an den Zuführungen wird im allgemeinen durch Schweißen, z.B. durch Argon-Arc-Schweißen oder Mikroplasmaschweißen vorgenommen. Bei solchen Schweißvorgängen kann es zu Schädigungen der Kathodenwendel im Befestigungsbereich kommen.

Der Erfindung liegt die Aufgabe zugrunde, eine verbesserte Befestigungsart einer Kathodenwendel an Metallstegen aus schwerschmelzbaren Metall anzugeben.
Diese Aufgabe wird durch die im Kennzeichen des Patentanspruches 1 genannten Merkmale gelöst.

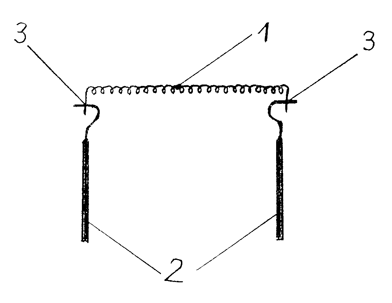

Ein wesentlicher Vorteil der Erfindung wird darin gesehen, daß insbesondere Querschnittsbeschädigungen der Wolframwendel vermieden werden. Die beschriebene Lötung eignet sich besonders dazu Kathodenwendeln aus Wolfram an Halterungsstegen aus Molybdän zu befestigen. Sie ist damit besonders zur Herstellung von Kathoden für Röntgenröhren geeignet, da sie auch hohen Temperaturen standhält.
Anhand des in der Figur schematisch dargestellten Ausführungsbeispiels wird die Erfindung nachfolgend näher erläutert.
Die Figur zeigt eine Kathodenwendel 1 aus Wolfram für eine Röntgenröhre. An ihren beiden Enden 3 ist sie an Haltestegen 2 befestigt die bevorzugt aus Molybdän bestehen. Diese Materialien besitzen auch bei höheren Temperaturen eine genügende Festigkeit.
Die Befestigung der Enden 3 der Wolframwendel an den Stegen 2 geschieht gemäß der Erfindung durch Löten, wobei als Lot Platin verwendet wird.
Die Zuführung der zum Löten erforderlichen Wärme erfolgt bevorzugt in der gleichen Weise wie beim Schweißen üblich. Sie wird also der Befestigungsstelle gezielt punktförmig zugeführt.

Ein bevorzugtes Erwärmungsverfahren besteht darin, die Hitze über einen auf die Lötstelle gerichteten, bzw. auf das Lot gerichteten Laserstrahl entsprechender Energiedichte zuzuführen. Zweckmäßig wird die Lötstelle mit einem Schutzgas umspült, z.B. mit Argon.

Ein anderes Erwärmungsverfahren besteht darin, an der Lötstelle einen Lichtbogen zu zünden. Dabei wird zweckmäßig ein Verfahren wie beim Argonarc-Schweißverfahren angewendet.
Die beschriebenen Verfahren gewährleisten eine hochtemperaturfeste Halterung und Kontaktierung der Wolframwendel ohne Gefahr, die Wendel zu beschädigen.

**Patentansprüche**

1. Verfahren zum Herstellen einer direkt geheizten Kathode für eine Kathodenstrahlröhre, insbesondere für eine Röntgenröhre, bei dem eine aus Wolfram bestehende Kathodenwendel Kathodenstreben aus hochschmelzendem Metall mittels punktförmig zugeführter Wärme tragend befestigt wird, dadurch gekennzeichnet, daß das die Befestigung unter Verwendung von Platin als Lot vorgenommen wird.

2. Verfahren nach Anspruch 1, dadurch gekennzeichnet, daß die Kathodenwendel an Kathodenstreben aus Molybdän befestigt wird.

3. Verfahren nach Anspruch 1 oder Anspruch 2, dadurch gekennzeichnet, daß die Lötung mittels punktförmig zugeführter Laserenergie vorgenommen wird.

4. Verfahren nach Anspruch 1 oder Anspruch 2, dadurch gekennzeichnet, daß die Lötung mittels eines Schweißlichtbogens zugeführt wird.

5. Verfahren nach einem der Ansprüche 1 bis 4, dadurch gekennzeichnet, daß die Lötung in eine Schutzgasatmosphäre, insbesondere in einen Schutzgasstrom wie z.B. in einer Argonatmosphäre vorgenommen wird.

Europäisches
Patentamt

**EUROPÄISCHER RECHERCHENBERICHT**

Nummer der Anmeldung

EP    91 11 8121

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN<br>vol. 6, no. 81 (E-107)19. Mai 1982<br>& JP-A-57 019 937 ( HITACHI ) 2. Februar 1982<br>* Zusammenfassung * | 1,4 | H01J9/04<br>B23K1/00<br>H01J1/15 |
| | --- | | |
| X<br>Y | US-A-2 341 716 (R.E. HERDMAN)<br>* das ganze Dokument * | 1<br>2-4 | |
| | --- | | |
| Y<br>A | FR-A-2 312 106 (PHILIPS)<br>* Seite 2, Zeile 4 - Zeile 14 *<br>* Abbildung 1 * | 2,4<br>1 | |
| | --- | | |
| Y | PATENT ABSTRACTS OF JAPAN<br>vol. 7, no. 189 (M-237)18. August 1983<br>& JP-A-58 090 389 ( HITACHI ) 30. Mai 1983<br>* Zusammenfassung * | 3 | |
| | --- | | |
| A | PATENT ABSTRACTS OF JAPAN<br>vol. 8, no. 59 (E-232)17. März 1984<br>& JP-A-58 209 042 ( HITACHI ) 5. Dezember 1983<br>* Zusammenfassung * | 1 | **RECHERCHIERTE SACHGEBIETE (Int. Cl.5)**<br><br>H01J<br>B23K |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 09 MAERZ 1992 | DAMAN M.A. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P0403)